(19) Europäisches Patentamt
European Patent Office
Office européen des brevets

(11) **EP 0 513 437 B1**

(12) **EUROPEAN PATENT SPECIFICATION**

(45) Date of publication and mention
of the grant of the patent:
**31.01.1996 Bulletin 1996/05**

(51) Int. Cl.[6]: **B28D 1/04**, B23Q 15/00,
B26D 7/26, B26D 3/16

(21) Application number: **91118988.4**

(22) Date of filing: **07.11.1991**

(54) **Blade position correction device for slicing machine**

Vorrichtung zur Einstellung der Schneidblattposition bei Schneidvorrichtungen

Dispositif pour ajuster la position de lame de coupe sur des machines à couper

(84) Designated Contracting States:
**DE FR GB IT**

(30) Priority: **17.05.1991 JP 113477/91**

(43) Date of publication of application:
**19.11.1992 Bulletin 1992/47**

(73) Proprietor: **MITSUBISHI MATERIALS
CORPORATION
Chiyoda-ku Tokyo (JP)**

(72) Inventor: **Yoshihiko, Kimura,
c/o Tsukuba-Seisakusho
Ishige-machi, Yuuki-gun, Ibaraki-ken (JP)**

(74) Representative: **Lehn, Werner, Dipl.-Ing. et al
D-81904 München (DE)**

(56) References cited:
**EP-A- 0 353 745          US-A- 4 537 177
US-A- 4 864 895**

**Description**

Background of the Invention

The present invention relates to a blade position correction device according to the preamble of claim 1, and relates to a method for cutting a workpiece with a rotary blade.

Such a blade position correction device is known from EP-A-0 353 745.

Hitherto, in this kind of machine the blade may be deformed for many reasons, such as oscillations coming from the outer parts, oscillations of all machine parts, structural inaccuracy of the machine, temperature differences, etc. Since the work-piece bends when this blade deformation is left uncorrected, it is necessary to prevent this deformation and improve the flatness of the blade for improving manufacturing accuracy.

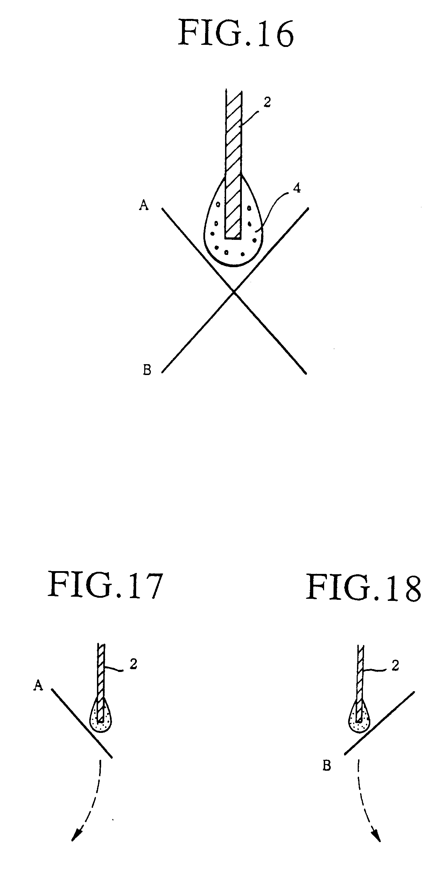

Until now, dressing (grindstone dressing) served as a method for controlling this blade deformation. An explanation of this dressing is given with reference to figures 16 to 18. Basically, when the deformation (curvature) of blade 2 is controlled, either the ingot side (same figures A) of the inner circle cutting edge 4 of blade 2, as shown in figure 16, or the machine side (same figures B) can be dressed. In this case, when the ingot side was dressed, blade 2 bends at the ingot side; when the machine side was dressed, blade 2 bends at the machine side, and therefore (figure 18) this characteristic is used to regulate deformation and to preserve flatness of the blade.

Presently, attempts are made to automate the aforementioned dressing and to improve the flatness of the blade, but these methods do not directly deform the blade; and furthermore, since there is no quantitatively fixed blade deformation, no matter to what extent the dressing is performed, high accuracy cannot be ensured.

In order to increase the rigidity of the blade, the blade is stressed radially outward, and by increasing this tension, the rigidity increases and the flatness improves; however, because the blade having a normal thickness of 0.1 mm to 0.2 mm is very thin, it breaks easily and is limited in rigidity when high tension is applied.

Summary of the Invention

As the present invention provides a blade position having the characterizing features of claim 1, and a corresponding method according to claim 5. It therefore exactly controls the deformation of the ferromagnetic blade in the thickness direction and is able to improve the accuracy of the cutting process remarkably.

Brief description of the attached drawings

Figure 1 is an illustration of the blade position correction device which relates to the first preferred embodiment of the present invention.

Figure 2 is a block diagram relating to the same preferred embodiment.

Figure 3 is another preferred embodiment performing blade deformations in thickness direction.

Figure 4 is a graph showing the relation of the distance between the magnet in figure 3 and the blade, and the deformation quantity of the blade.

Figure 5 shows an illustration of a practical construction of the electromagnet.

Figure 6 illustrates the flow of the magnetic flux of the magnet from figure 5.

Figure 7 is an illustration showing cutting conditions of the wafer.

Figure 8 is a graph showing the stress in the mounted blade.

Figure 9 is a graph showing the strain in the mounted blade.

Figure 10 shows the deformation when a force of 1N is imposed on one point of the inner circumference of the blade when analyzed by numerical difference calculus.

Figure 11 shows the deformation when a force of 1N is imposed on one point between outer and inner circumference when analyzed by numerical difference calculus.

Figure 12 is a graph showing the deformation of figure 10 in quantity.

Figure 13 shows the positioning of electromagnets.

Figure 14 is a graph showing the blade deformation caused by two electromagnets.

Figure 15 is a graph showing the blade deformation for the cases when rotation was considered and neglected.

Figure 16 is a side view of the inner circumferential cutting edge vicinity of the blade.

Figure 17 is the same side view.

Figure 18 is the same side view.

Figure 19 is a graph showing the relation between the position of the blade and the gap.

Figure 20 is a graph showing the relation between the position of the blade and the rotation frequency of the blade.

Detailed description of the preferred embodiments

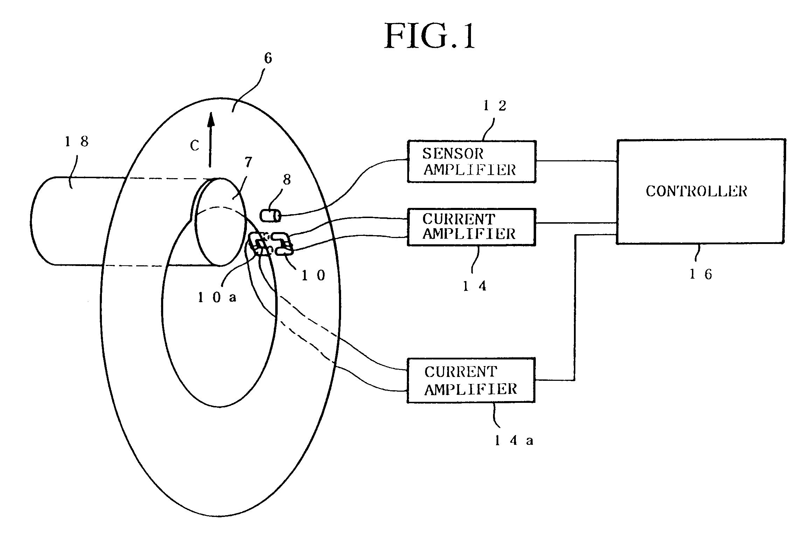

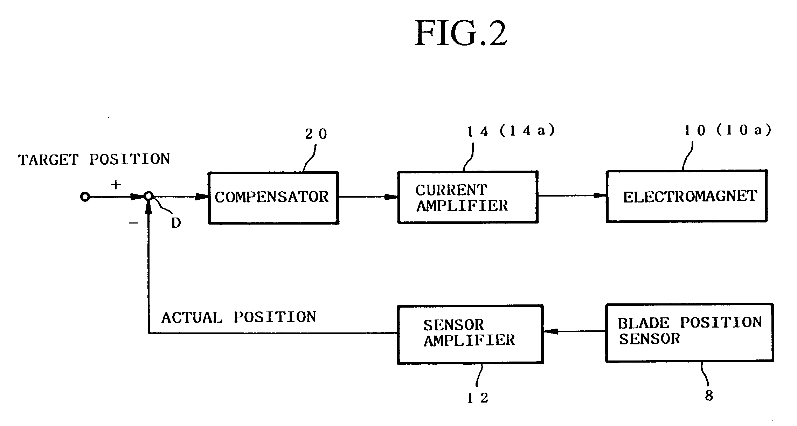

Hereinafter, an explanation of the first preferred embodiment of the present invention is given by referring to figure 1 and 2.

In figure 1, a ring shaped blade 6 made of ferromagnetic material is driven to rotate around its axis by a driving part of a slicing machine which is not shown. Although stainless of the austenite group (AISI 301,304) and precipitation hardened stainless (17-7PH), etc., may be used as construction material for the blade cutting kinds of semiconductors, the phase of any construction material undergoing cold working (rolling) becomes martensite (ferromagnetic material). In the experiment, the inventor used a permanent magnet of 13 mm in diameter, and measured an applied suction force of approximately 250 gf on the austenite stainless blade (thickness 0.18 mm).

In the cutting part vicinity of inner circumference cutting edge 7 formed at the inner circumference of said blade 6, a blade position sensor 8 working according to, for example, the eddy current formula and detecting the position of blade 6 in thickness direction, and an electromagnet 10 exerting a magnetic force in thickness direction on blade 6 are provided. The aforementioned blade position sensor 8 and electromagnet 10 are respectively connected to controller 16 via sensor amplifier 12 and current amplifier 14. On the backside of aforementioned electromagnet 10 and inserted blade 6, an electromagnet 10a, similar to the aforementioned electromagnet 10, is positioned face to face and connected to aforementioned controller 16 via a current amplifier 14a, similar to aforementioned current amplifier 14.

In the blade position correction device of the aforementioned construction, the work-piece 18, for example a silicon monocrystal, is put in by the width of thickness to be processed in the axial direction and then, while blade 6 is rotating, it is moved in a direction orthogonal to the aforementioned axial direction (direction of arrow C in figure 1) and the aforementioned work-piece is cut by the inner circumference cutting edge 7.

At this time (while cutting), if a deformation in thickness direction of blade 6 (a deformation from a certain setting position) is detected by blade position sensor 8, the output signal of blade position sensor 8 is transferred to controller 16 via sensor amplifier 12. For compensating for this deformation and for maintaining the flatness of blade 6, controller 16 regulates via current amplifier 14 and 14a the balance of the suction forces of electromagnets 10 and 10a, and thus the blade is deformed the same amount as the aforementioned deformation in the opposite direction. This position correction of blade 6 is usually performed during the cutting process of work-piece 18.

The function of aforementioned controller 16 is illustrated more concretely in figure 2. In other words, the output signal from blade position sensor 8 passes sensor amplifier 12 and is guided to deviation detection point D; the discrepancy to the target value is calculated; the signal corresponding to this discrepancy is output, passes a compensator 20 (PID control) consisting of, for example, a phase shift filter, and current amplifier 14 and 14a and the magnetic force intensity of electromagnet 10 and 10a is controlled.

In the case of the blade position correction device of a slicing machine according to the aforementioned construction, the blade made of ferromagnetic material is directly controlled by applying a magnetic force and therefore deflection of the blade is accurately controlled, a high degree of flatness is maintained while the blade is in the cutting process, and thus the accuracy in the cutting process increases remarkably.

Though in aforementioned figure 1, electromagnets 10 and 10a are positioned on both sides of blade 6, an electromagnet does not necessarily have to be positioned on both sides of the blade, but also may be positioned on only one side of the blade. When the electromagnet is positioned on only one side of the blade, a predetermined magnetic force is applied to the blade and causes it to deform; from this position it may be moved to either side. Thus, if the magnetic force acting on the blade gets weaker, the blade moves in the direction which diminishes the amount of deformation, and conversely, if the magnetic force gets stronger, the blade moves to the direction which increases the amount of deformation.

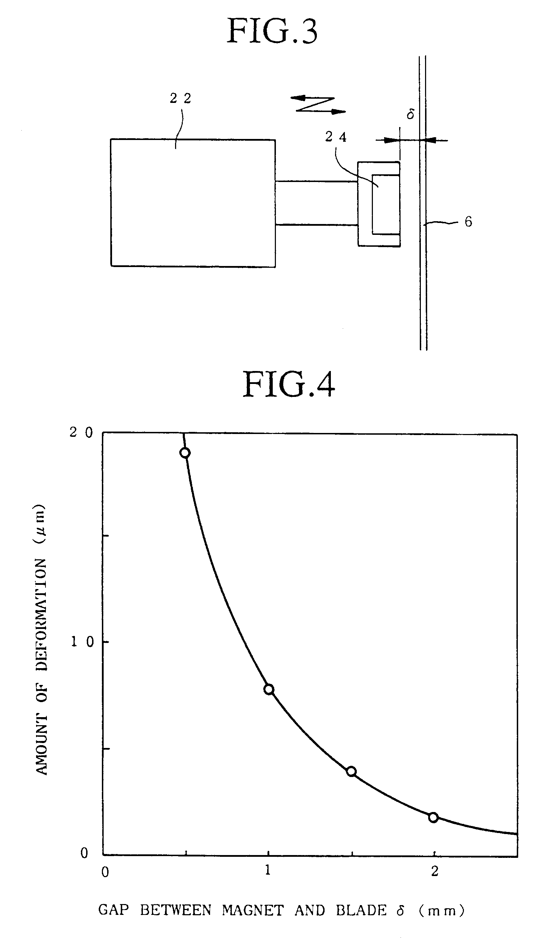

Instead of using an electromagnet as mentioned before, a permanent magnet, as indicated in figure 3, may be used for the construction displacing the blade in thickness direction. The permanent magnet 24 having a diameter of 16 mm and a thickness of 8 mm is installed at the driving part terminal of the longitude mechanism 22 made up from an oil pressure cylinder, a motor, a ball screw, etc., so that permanent magnet 24 can freely move towards blade 6 (in this case, 8 inches) in a vertical straight line.

When this permanent magnet 24 approaches blade 6, the magnetic force acting on blade 6 increases, blade 6 deforms at the side of permanent magnet 24, and if on the other hand it is retreated, the magnetic force acting on blade 6 decreases and the amount of deformation of blade 6 gets smaller. Figure 4 shows the relation between gap $\delta$, which is between permanent magnet 24 and blade 6, and degree of deformation u of blade 6, being approximately indirect proportional, as can be seen from the same figure.

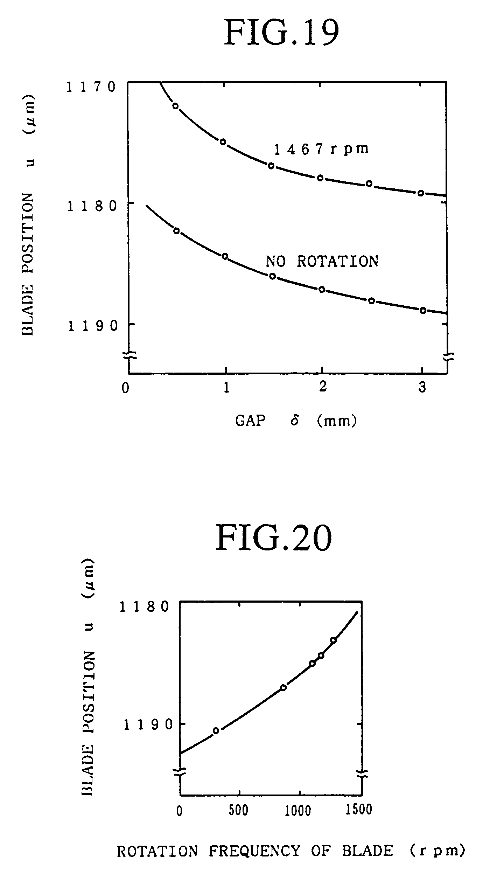

For a 6 inch blade of a thickness of 0.12 mm and a cobalt magnet (permanent magnet) of an external length of 20 mm and a thickness of 10 mm, similarly figure 19 shows the relation between gap $\delta$, when varied in the range of 0.5 mm to 4 mm on one side of the blade, and blade position u. The same figure shows the case for a nonrotating blade and the case for 1467 rpm. As can be seen from the same figure the blade moves up to 10 $\mu$m during the process. This blade movement is made use of and the inventor confirms that the blade can be moved round the vicinity of the middle point as one likes. Figure 20 shows the relation between the rotation frequency of the blade and the position of the blade when no magnetic force is acting.

Furthermore, if the permanent magnet is positioned at only one side in thickness direction of the blade as described before, this permanent magnet is positioned at a certain distance from the blade, a beforehand determined magnetic force acts on the blade and causes it to deform, and if this permanent magnet is caused to advance and retreat from the aforementioned position in the thickness direction of the blade, then the control of the deformation property of the blade can be controlled.

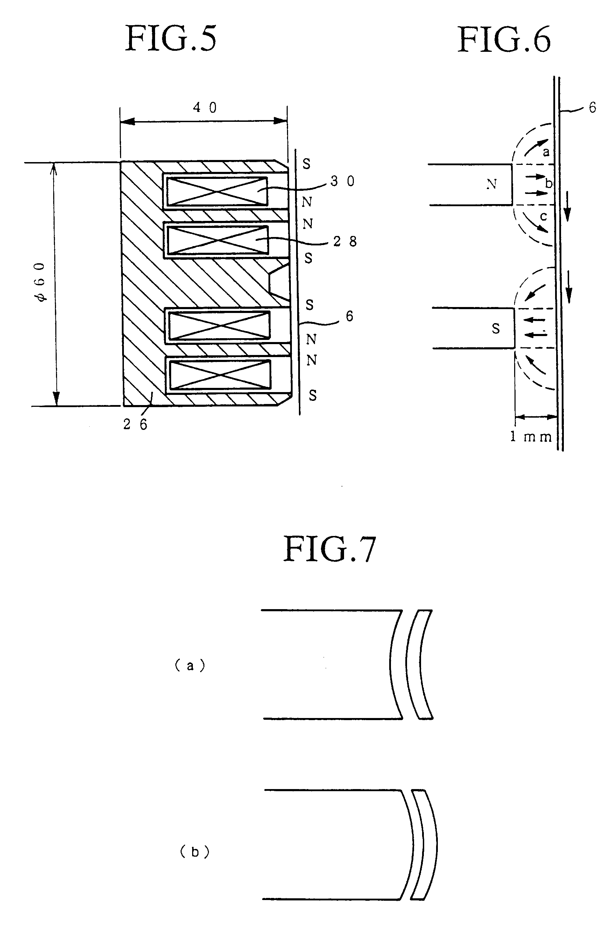

Because, as mentioned before, with normal proportions of 0.1 mm to 0.2 mm the blade is extremely thin, and therefore the magnetic flux is difficult to pass, it is necessary to take into account the suction force of the magnet. Figure 5 shows an example of a concrete construction of an electromagnet; the basic body 26 made of ferromagnetic material is formed by concentric ring-shaped grooves in the inner and outer part; in the inner groove a coil 28 in wound; in the outer groove a coil 30 is wound. Thus, by doubling the coils, the suction force becomes twice as large when compared with normal electromagnets. The thickness of the blade is 0.13 mm, the saturation magnetic flux density of the blade 1.1 $Wb/m^2$, the suction force 1N (approximately 100 gf) and the gap between the blade and the electromagnet 1 mm. In this case, the permeance P1 of the opening b becomes

$$P1 = \mu s/X$$

the combined permeance P2 of opening a, c becomes

$$P2 = 1.056 \, \mu L$$

X is the gap (1 mm), s the cross-section of the point of the electromagnet and L the length. This electromagnet consists of four concentric round shaped poles, and hereafter an average pole is considered (L is the average length of the circumference).

$$L = 117.8 \text{ mm}, s = L \cdot 1 \text{ mm} = 117.8 \text{ mm}^2 = 1.1178 \cdot 10^{-4} \text{ m}^2$$

Since the whole structure exerts a force of 1 N, each part must exert a force of 0.25 N. For this reason, the flux density Bg of opening b becomes

$$Bg = (8\pi \cdot 10^{-7} {}^*0.25/s)^{1/2} = 0.075 \text{ Wb/m}^2 \, .$$

Therefore, the total magnetic flux flowing through openings a, b, c becomes

$$\Phi = Bg \cdot s(P1 + P2)/P1 = 1.68 \cdot 10^{-5} \text{ Wb} \, .$$

The magnetic flux density inside the blade becomes

$$Bg = \Phi/(0.13 \cdot 10^{-3}L) = 1.1 \text{ Wb/m}^2 \, .$$

This is the utmost saturation limit. Because the necessary magnetomotive force per pole is

$$N \cdot I = Bg \cdot s/P1 = Bg \cdot X/\mu = 62 \text{ A} \cdot \text{turn}$$

when the magnetic resistance of the iron core and blade is neglected, the number of coil turns is set to, for example, 310, a current of 200 mA is necessary.

As mentioned before, during the cutting process of the work-piece, the blade is controlled to have its normal flatness. In this case, the bending of the wafer cut by the slicing machine is defined to be negative when bending as shown in figure 7(a) and defined to be positive when bending as shown in figure 7(b). For being more precise, rather than controlling longitudinal deflections from a position which caused the blade to be flat, it is mostly controlled in such a way that the wafer gets a slight negative deflection during the cutting of the working piece. If the wafer has a positive bending, the diffusion of the coolant deteriorates, the wafer breaks and the blade suffers damage.

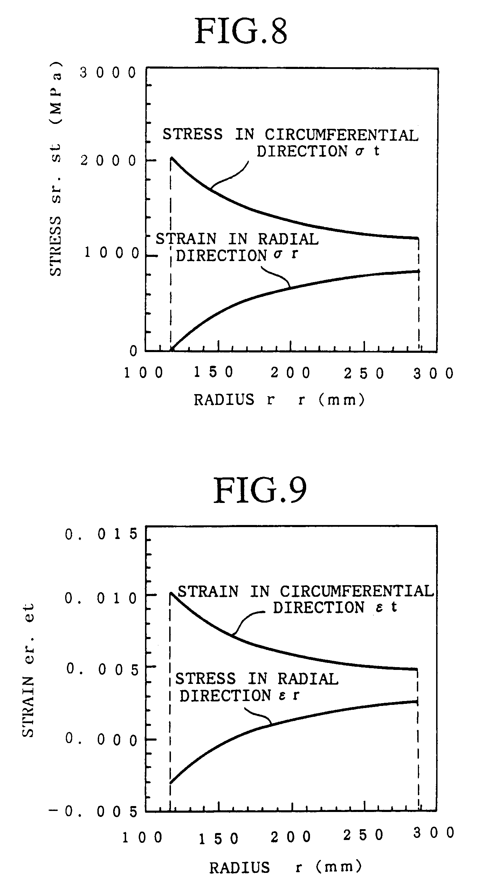

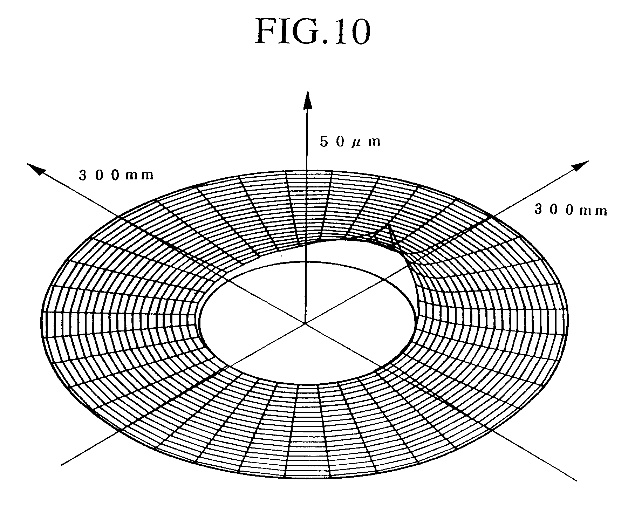

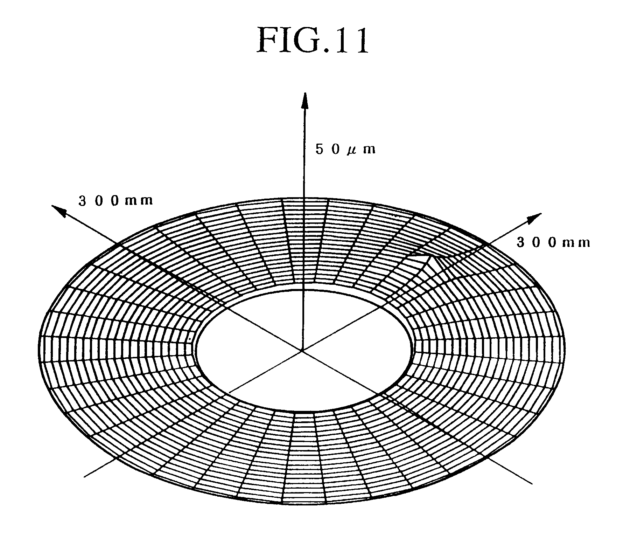

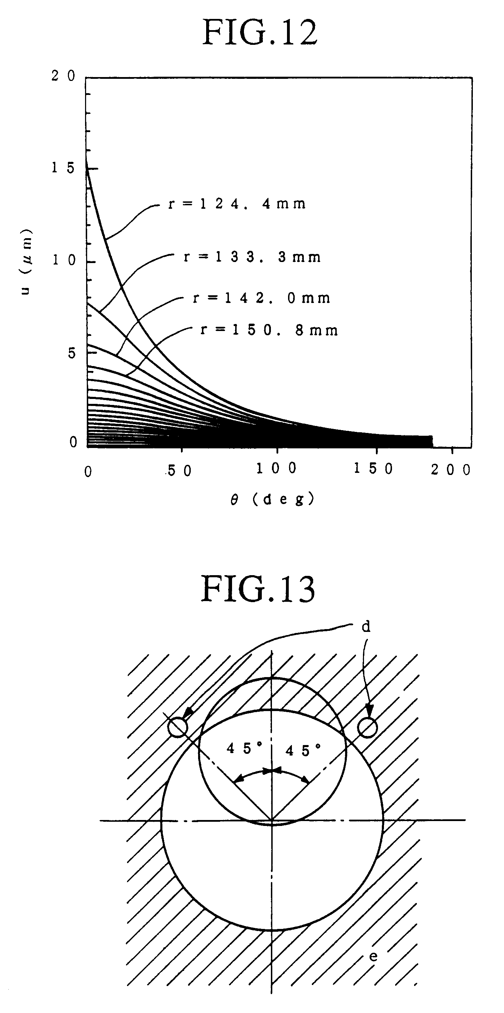

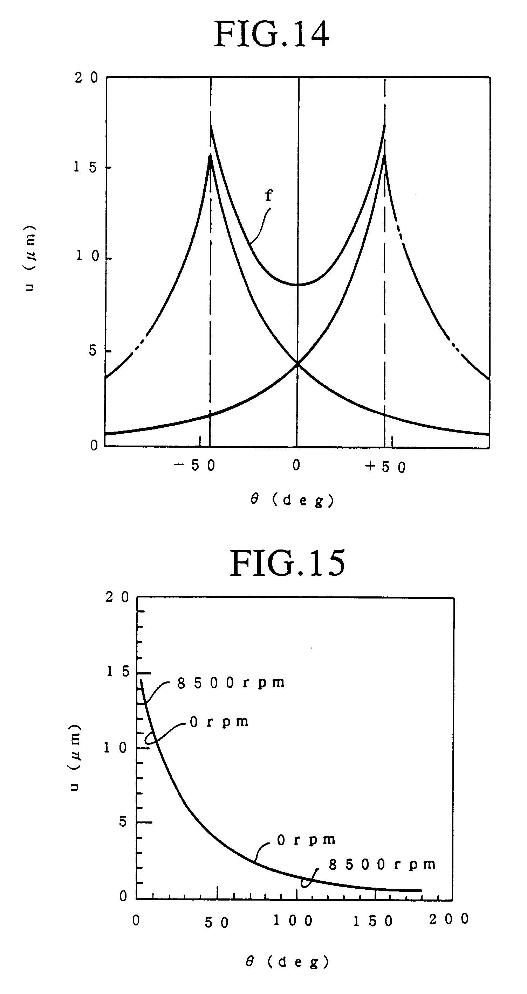

Furthermore, if stress is applied in radial direction of the blade while cutting (lift up), the blade deforms. If a tensile force is applied so that the radius of the inner circle increases 1.2 mm, the aforementioned stress inside the blade is shown in figure 8, and the strain shown in figure 9 for a Young's modulus of $2.0 \cdot 10^5$ (anisotropy neglected) and for a 27 inch blade (inner diameter 235 mm) of a Poisson ratio of 0.3. When dividing the blade in 720 elements, the relation between force and deformation obtained by numerical difference calculus becomes as shown in figures 10 and 11. Figure 10 shows the deformation when a force of 1N was exerted on one point of the inner circle of the blade, and figure 11 shows the deformation when a force of 1N was exerted on a point located between the outer and inner circumference, r is 203.6mm and $\Theta$ is 0 degree. The deformation in figure 10 is displayed in figure 12, so that the quantity of deformation can easily be seen, wherein for the point where the force is exerted $\Theta = 0°$, and for the position diametrical opposite $\Theta = 180°$. The place where r = 124.4 mm lies near the inner circumference and a deformation of 16 μm for a force of 1 N (approximately 100 gf) can be observed. In Figure 13, the electromagnet is designated by "d", and the blade is designated by "e". If a force of 1N is applied by electromagnet d to two points (± 45° from the axis) located near the silicon cutting part (working piece), as indicated in figure 13, the deformation curve f of the sector there in between is shown in figure 14. As in the aforementioned analysis, the effects of a rotating blade are neglected; when considering the rotation, even for 8500 rpm (equivalent to approximately 5 times the normal rotation frequency) the influence is small, as shown in figure 15. This is because the mass of the blade is small and therefore the influence of the inertia does not get too big.

## Claims

1. A blade position correction device for correcting a position of a ferromagnetic ring-shaped blade (6) in a thickness direction thereof, said blade (6) having a cutting edge formed at an inner circumference thereof and being caused to rotate by a slicing machine in order to cut a workpiece (18), comprising:

   a) a blade position sensor (8) for generating a signal in response to the position of said blade (6) in said thickness direction;
   **characterized** by

   b) at least one magnetic force generation means (10, 14) disposed on one side of the blade (6) for generating a magnetic field to effect displacement of said cutting edge, said magnetic force generation means (10, 24) being controlled by a control signal so as to vary the magnitude of said magnetic field applied to said blade (6) and thus the amount of displacement of said cutting edge from an initial position, said magnetic force generation means (10, 24) generating an initial magnetic force so as to effect an initial deformation of said blade (6) when said cutting edge is in said initial position prior to said cutting operation; and

   c) a magnetic force control means (16) constructed and arranged to control the magnitude of the magnetic field generated by said magnetic force generation means (10, 24) and thereby controlling the amount of displacement of said cutting edge from said initial position,
   said magnetic force control means (14) being responsive to a signal generated by said sensor (8) to increase said magnetic field generated by said magnetic force generating means (10, 24) to increase deformation of said blade (6) relative to said initial deformation and thereby magnetically bias said cutting edge in a first direction with respect to said initial position of the cutting edge when said cutting edge is displaced in a second direction opposite said first direction as a result of the cutting operation, said magnetic force control means (14) decreasing said magnetic field generated by said magnetic force generation means (10, 24) to reduce the deformation of said blade (6) relative to said initial deformation and thereby permit said cutting edge to move in said second direction opposite the first direction when the cutting edge is displaced in the first direction as a result of the cutting operation.

2. The blade correction device according to claim 1, wherein the magnetic force generation means is an electromagnet (10, 26), and said magnetic force control means controls the amount of current travelling through said electromagnet (10, 26).

3. The blade correction device according to claim 1, wherein the magnetic generation means includes at least one permanent magnet (24) disposed on one side of said blade (6), and a moving means (22) for moving said permanent magnet (24) in the thickness direction of said blade (6).

4. The blade correction device according to claim 1, wherein a pair of said magnetic field generation means (d) are disposed at both sides, in the circumferential direction of said blade (6), of a workpiece cutting part of said cutting edge of said blade (6).

5. A method for cutting a workpiece with a rotary blade 86) having a cutting edge and being made of ferromagnetic material, said method comprising the steps of:
   applying an initial magnetic field with a predetermined magnitude to the blade (6) in order to initially deform the blade (6) and prior to cutting said workpiece (18);
   rotating said rotary blade (6) to cut said workpiece (18);
   sensing a displacement of said cutting edge away from said initial position thereof; and

altering the predetermined magnitude of said magnetic field applied to the blade according to the amount of displacement of said cutting edge away from said initial position thereof, said altering step including the steps of:

    i) increasing the magnitude of said magnetic field relative to said predetermined magnitude when the blade is deformed as a result of a cutting operation to an extent lesser than said initial deformation; and

    ii) decreasing the magnitude of said magnetic field relative to said predetermined magnitude when the blade (6) is deformed as a result of the cutting operation to an extent greater than said initial deformation.

**Patentansprüche**

1. Blattpositions-Korrekturvorrichtung zum Korrigieren einer Position eines ferromagnetischen ringförmigen Blattes (6) in einer Dickenrichtung davon, wobei das Blatt (6) einen Schnittrand ausgebildet hat an einem Innenumfang davon und veranlaßt wird zur Rotation durch eine Schneidemaschine zum Schneiden eines Werkstückes (18), welche umfaßt:

    a) einen Blattpositionssensor (8) zum Erzeugen eines Signals ansprechend auf die Position des Blattes (6) in der Dicken - richtung;
    **gekennzeichnet** durch

    b) zumindest eine Magnetkraft-Erzeugungseinrichtung (10,14), angeordnet auf einer Seite des Blattes (6) zum Erzeugen eines Magnetfelds zum Bewirken einer Verrückung des Schnittrandes, wobei die Magnetkraft-Erzeugungseinrichtung (10, 24), gesteuert wird durch ein Steuersignal, um somit die Größe des Magnetfelds, das an das Blatt (6) angelegt ist, zu variieren, und somit den Betrag der Verrückung des Schnittrandes von einer Anfangsposition, wobei die Magnetkraft-Erzeugungseinrichtung (10, 24) eine anfängliche Magnetkraft erzeugt, um somit eine anfängliche Deformation des Blattes (6) zu bewirken, wenn der Schnittrand in der Anfangsposition vor dem Schneidbetrieb ist;

    c) eine Magnetkraft-Steuereinrichtung (16), die konstruiert und ausgerichtet ist zum Steuern der Größe des Magnetfeldes, das durch die Magnetkraft-Erzeugungseinrichtung (10, 24) erzeugt ist, und um dadurch den Verrückungsbetrag des Schnittrandes von der Anfangsposition zu steuern,
    wobei die Magnetkraft-Steuereinrichtung (14) anspricht auf ein Signal, das erzeugt wird durch den Sensor (8), zum Erhöhen des Magnetfelds, das durch die Magnetkraft-Erzeugungseinrichtung (10,24) erzeugt wird, zum Erhöhen der Deformation des Blattes (6) relativ zur Anfangsdeformation und dadurch den Schnittrand magnetisch vorzuspannen in einer ersten Richtung bezüglich der Anfangsposition des Schnittrandes, wenn der Schnittrand verrückt wird in eine zweite Richtung entgegengesetzt der ersten Richtung als Resultat des Schneidbetriebs, wobei die Magnetkraft-Steuereinrichtung (14) das Magnetfeld, das durch die Magnetkraft-Erzeugungseinrichtung (10, 24) erzeugt wird, reduziert zum Reduzieren der Deformation des Blattes (6) relativ zur Anfangsdeformation und dadurch zuläßt, daß der Schnittrand sich in der zweiten Richtung im Gegensatz zur ersten Richtung bewegt, wenn der Schnittrand verrückt wird in die erste Richtung als ein Resultat des Schneidbetriebs.

2. Blattkorrekturvorrichtung nach Anspruch 1, dadurch gekennzeichnet, daß die Magnetkraft-Erzeugungseinrichtung ein Elektromagnet (10, 26) ist, und die Magnetkraft-Steuereinrichtung den Betrag des Stroms, der durch den Elektromagneten (10, 26), steuert.

3. Korrekturvorrichtung nach Anspruch 1, dadurch gekennzeichnet, daß die Magnetkraft-Erzeugungseinrichtung zumindest einen Permanentmagneten (24) angeordnet auf einer Seite des Blattes (6) enthält und eine Bewegungseinrichtung (22) zum Bewegen des Permanentmagneten (24) in der Dickenrichtung des Blattes (6).

4. Blattkorrekturvorrichtung nach Anspruch 1, dadurch gekennzeichnet, daß ein paar der Magnetfeld-Erzeugungseinrichtung (d) angeordnet ist auf beiden Seiten in der Umfangsrichtung des Blattes (6) eines Werkstück-Schneideteils des Schneidrandes des Blattes (6).

5. Verfahren zum Schneiden eines Werkstückes mit einem rotierenden Blatt (6) mit einem Schnittrand und hergestellt aus einem ferromagnetischen Material, wobei das Verfahren die Schritt umfaßt:
Anlegen eines Anfangsmagnetfeldes mit einer vorbestimmten Größe an das Blatt (6) zum anfänglichen Deformieren des Blattes (6) und vor dem Schneiden des Werkstücks (18);
Rotieren des rotierenden Blattes (6) zum Schneiden des Werkstückes (18);

Erfassen einer Verrückung des Schneidrands weg von der Anfangsposition; und

Ändern der vorbestimmten Größe des Magnetfelds, das angelegt ist an das Blatt, gemäß dem Betrag der Verrückung des Schnittrandes weg von der Anfangsposition davon, wobei der Änderungsschritt die folgenden Schritte umfaßt:

i) Erhöhen der Größe des Mangetfelds relativ zur vorbestimmten Größe, wenn das Blatt deformiert wird als Resultat eines Schneidbetriebs zu einem Ausmaß geringer als der anfänglichen Deformation; und

ii) Absenken des Größe des Magnetfeldes relativ zur vorbestimmten Größe, wenn das Blatt (6) deformiert wird als ein Resultat des Schneidebetriebs auf ein Ausmaß größer als die anfängliche Deformation.

## Revendications

1.  Dispositif d'ajustement de position de lame de coupe pour ajuster une position d'une lame de forme annulaire ferromagnétique (6) dans un sens de l'épaisseur de celle-ci, ladite lame de coupe (6) comportant un bord de coupe formé à une circonférence interne de celle-ci et étant entraînée en rotation par une machine de découpe afin de couper une pièce d'ouvrage (18), comprenant :

    a) un capteur de position d'une lame de coupe (8) pour produire un signal en réponse à la position de ladite lame de coupe (6) dans ledit sens de l'épaisseur ;
    caractérisé par
    b) au moins un moyen de génération de force magnétique (10, 14) disposé sur un côté de la lame de coupe (6) pour générer un champ magnétique en vue d'effectuer un déplacement dudit bord de coupe, ledit moyen de génération de force magnétique (10, 24) étant commandé par un signal de commande de manière à faire varier l'amplitude dudit champs magnétique appliqué à ladite lame de coupe (6) et, ainsi, la quantité de déplacement dudit bord de coupe à partir d'une position initiale, ledit moyen de génération de force magnétique (10, 24) générant une force magnétique initiale de manière à produire une déformation initiale de ladite lame de coupe (6) lorsque ledit bord de coupe se trouve dans ladite position initiale avant ladite opération de coupe ; et
    c) un moyen de commande de force magnétique (16) conçu et agencé pour commander l'amplitude du champ magnétique généré par ledit moyen de génération de force magnétique (10, 24) et, ainsi, régulant la quantité de déplacement dudit bord de coupe depuis ladite position initiale,
    ledit moyen de commande de force magnétique (14) étant sensible à un signal produit par ledit capteur (8) pour accroître ledit champ magnétique généré par ledit moyen de génération de force magnétique (10, 24) pour accroître la déformation de ladite lame de coupe (6) par rapport à ladite déformation initiale et, ainsi, polariser magnétiquement ledit bord de coupe dans une première direction par rapport à ladite position initiale du bord de coupe lorsque ledit bord de coupe est déplacé dans une seconde direction opposée à ladite première direction comme un effet de l'opération de coupe, ledit moyen de commande de force magnétique (14) diminuant ledit champ magnétique généré par ledit moyen de génération de force magnétique (10, 24) pour réduire la déformation de ladite lame de coupe (6) par rapport à ladite déformation initiale et, ainsi, permettre audit bord de coupe de se déplacer dans ladite seconde direction opposée à la première direction lorsque le bord de coupe est déplacé dans la première direction comme un effet de l'opération de coupe.

2.  Dispositif d'ajustement d'une lame de coupe selon la revendication 1, dans lequel le moyen de génération de force magnétique est un électroaimant (10, 26) et dans lequel ledit moyen de commande de force magnétique commande la quantité de courant circulant à travers ledit électroaimant (10, 26).

3.  Dispositif d'ajustement de la lame de coupe selon la revendication 1, dans lequel le moyen de génération magnétique comprend au moins un aimant permanent (24) disposé sur un côté de ladite lame de coupe (6) et un moyen de déplacement (22) pour déplacer ledit aimant permanent (24) dans le sens de l'épaisseur de ladite lame de coupe (6).

4.  Dispositif d'ajustement d'une lame de coupe selon la revendication 1, dans lequel une paire dudit moyen de génération de champ magnétique (d) est disposée au niveau des deux côtés, dans la direction circonférencielle de ladite lame de coupe (6), d'une partie de coupe de pièce d'ouvrage dudit bord de coupe de ladite lame de coupe (6).

5.  Procédé pour couper une pièce d'ouvrage à l'aide d'une lame de coupe tournante (86) comportant un bord de coupe et étant constitué d'un matériau ferromagnétique, ledit procédé comprenant les étapes consistant à :
    appliquer un champ magnétique initial avec une amplitude prédéterminée à la lame de coupe (6) en vue de déformer initialement la lame (6) et préalablement à la découpe de ladite pièce d'ouvrage (18) ;
    entraîner ladite lame de coupe tournante (6) en rotation pour couper ladite pièce d'ouvrage (18) ;
    détecter un déplacement dudit bord de coupe l'éloignant de ladite position initiale de celui-ci ; et

modifier l'amplitude prédéterminée dudit champ magnétique appliqué à la lame de coupe conformément à la quantité de déplacement dudit bord de coupe l'éloignant de ladite position initiale de celui-ci, ladite étape de modification comprenant les étapes consistant a :

> i) accroître l'amplitude dudit champ magnétique par rapport à ladite amplitude prédéterminée lorsque la lame de coupe est déformée par l'effet d'une opération de coupe dans une mesure moindre que ladite déformation initiale , et
>
> ii) diminuer l'amplitude dudit champ magnétique par rapport à ladite amplitude prédéterminée lorsque la lame de coupe (6) est déformée par l'effet de l'opération de coupe dans une mesure plus grande que ladite déformation initiale.

# FIG.1

EP 0 513 437 B1

# FIG.2

TARGET POSITION → (+/−) → COMPENSATOR (20) → CURRENT AMPLIFIER (14 (14a)) → ELECTROMAGNET (10 (10a))

D

ACTUAL POSITION ← SENSOR AMPLIFIER (12) ← BLADE POSITION SENSOR (8)

EP 0 513 437 B1

# FIG.3

# FIG.4

AMOUNT OF DEFORMATION (μm)

GAP BETWEEN MAGNET AND BLADE δ (mm)

# FIG.5

# FIG.6

# FIG.7

(a)

(b)

# FIG.8

STRESS IN CIRCUMFERENTIAL
DIRECTION σ t

STRAIN IN RADIAL
DIRECTION σ r

# FIG.9

STRAIN IN CIRCUMFERENTIAL
DIRECTION ε t

STRESS IN RADIAL
DIRECTION ε r

# FIG.10

50 μm

300mm

300mm

EP 0 513 437 B1

FIG.11

# FIG.12

# FIG.13

# FIG.14

# FIG.15

# FIG.16

# FIG.17

# FIG.18

# FIG.19

# FIG.20